(19) Europäisches Patentamt
European Patent Office
Office européen des brevets

(11) Publication number: **0 292 154 B1**

(12) **EUROPEAN PATENT SPECIFICATION**

(45) Date of publication of patent specification: **15.04.92**

(51) Int. Cl.5: **A01N 43/40**, //(A01N43/40, 37:38)

(21) Application number: **88304072.7**

(22) Date of filing: **05.05.88**

(54) **Herbicidal method using diflufenican.**

(30) Priority: **05.05.87 GB 8710584**

(43) Date of publication of application:
**23.11.88 Bulletin 88/47**

(45) Publication of the grant of the patent:
**15.04.92 Bulletin 92/16**

(84) Designated Contracting States:
**AT BE CH DE ES FR GB GR IT LI LU NL SE**

(56) References cited:
**GB-A- 2 087 887**

**CHEMICAL ABSTRACTS, vol. 84, no. 25, 21st June 1976, page 176 abstract no. 175170s, Columbus, Ohio, US; JP-A-76 12 925 (CHUGAI PHARMACEUTICAL CO. LTD) 31-01-1976**

(73) Proprietor: **MAY & BAKER LIMITED**

**Dagenham Essex RM10 7XS(GB)**

(72) Inventor: **Hewett, Richard Henry**
**May & Baker Ltd. Dagenham**
**Essex, RM10 7XS(GB)**
Inventor: **Luscombe, Brian Malcolm**
**May & Baker Ltd. Dagenham**
**Essex, RM10 7XS(GB)**

(74) Representative: **Bentham, Stephen et al**
**J.A. Kemp & Co. 14 South Square Gray's Inn**
**London WC1R 5EU(GB)**

**EP 0 292 154 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to new herbicidal compositions comprising N-(2,4-difluorophenyl)-2-(3-trifluoromethylphenoxy)nicotinamide of formula I depicted hereinafter, which is disclosed in the specification of British Patent No. 2087887B as a pre-and/or post-emergence herbicide, and to their use in agriculture.

Napropamide - i.e. (R,S)-N,N-diethyl-2-(1-naphthyloxy)propionamide - is used on a large scale for pre-emergence weed control.

As a result of research and experimentation it has now been discovered that the use of the compound N-(2,4-difluorophenyl)-2-(3-trifluoromethylphenoxy)nicotinamide (hereinafter referred to for convenience as diflufenican) in combination with napropamide gives a wider spectrum of weed control that can be achieved by either compound used alone.

Therefore the said combined use represents an important technological advance.

Surprisingly, in addition to this, it has been found that the combined herbicidal activity of combinations of diflufenican with napropamide against certain broad-leaf weed species, for example Stellaria media, Tripleurospermum maritimum and Galium aparine, is much greater than expected when applied pre-emergence (e.g. as a pre-emergence spray), i.e. the herbicidal activity of combinations of diflufenican with napropamide showed an unexpected and remarkable degree of synergism [as defined by P.M.L. Tammes, Netherlands Journal of Plant Pathology, 70 (1964), pp 73-80 in a paper entitled "Isoboles, a graphic representation of synergism in pesticides"].

The remarkable synergistic effect of the mixture applied pre-emergence gives improved reliability of control of weed species and allows for a reduction in the amount of active ingredient employed.

Accordingly the present invention provides a method for the control of the growth of weeds at a locus which is an area used or to be used for growing trees, shrubs or soft fruit plants which comprises the combined use of (a) napropamide and (b) diflufenican.

The present invention accordingly provides a method of controlling the growth of weeds at a locus used, or to be used, for growing trees, shrubs or soft fruit plants which comprises applying to the locus (a) napropamide and (b) diflufenican.

Preferably the application rates of (a) and (b) are from 250g to 10kg (more preferably from 1kg to 4kg)-/ha and from 50g to 500g (more preferably from 100g to 250g)/ha respectively, of (a) and (b) in proportions of 200:1 to 1:2 and preferably 40:1 to 4:1 wt/wt of (a) to (b). The method of the invention may be used, for example, to control a broad spectrum of weed species in: ornamental shrubs and nursery trees for coniferous or deciduous forestation prior to or after final planting; soft fruit plants, e.g. grape-vines, blackberries, boysenberries, loganberries, raspberries and strawberries; fruit trees such as citrus, e.g. grapefruit, lemons, oranges and tangerines; deciduous trees, e.g. apples, apricots, cherries, nectarines, peaches, pears and plums; sub-tropical trees, e.g. avocado, kiwi, olives and persimmon; and nuts, e.g. almonds, filberts, pecans, pistachio and walnuts, by pre-emergence application in a directional or non-directional manner to the soil, for example by watering-in, using irrigation in the absence of rainfall. Application of the napropamide and diflufenican may be made simultaneously or sequentially.

By the term 'pre-emergence application' is meant application to the soil in which the weed seeds or seedlings are present before emergence of the weeds above the surface of the soil.

Weeds that may be controlled by the method include:- from broad-leaf weeds, Polygonum convolvulus, Polygonum aviculare, Polygonum persicaria, Polygonum lapathifolium, Stellaria media, Atriplex patula, Spergula arvensis, Chenopodium album, Veronica persica, Veronica hederifolia, Lamium amplexicaule, Lamium purpureum, Matricaria spp. e.g. Matricaria inodora (also known as Tripleurospermum maritimum), Solanum nigrum, Conyza canadensis, Sinapis arvensis, Galium aparine, Fumaria officinalis, Papaver rhoeas, Geranium spp., Viola arvensis, Thlaspi arvense, Senecio vulgaris, Galeopsis tetrahit, Anagallis arvensis, Capsella bursa-pastoris, Urtica urens, Sonchus spp., Raphanus raphanistrum and Amsinckia intermedia, and from grass weeds, Poa annua, Poa trivialis, Alopecurus myosuroides, Bromus sterilis, Avena fatua, Holcus lanatus, Echinochloa crus-galli, Digitaria sanguinalis, Eleusine indica, Setaria viridis, and seedlings of Sorghum halepense.

In accordance with usual practice, a tank mix may be prepared prior to use by combining separate formulations of the individual herbicidal components, or separate formulations may be applied in a time-separated manner.

The following greenhouse experiment demonstrates the synergistic activity of the combined use of napropamide and diflufenican in controlling certain weeds by pre-emergence application.

Greenhouse experiment showing the nature of biological synergism between napropamide and diflufenican applied pre-emergence

A factorial experiment with 37 treatments was carried out to investigate the interaction of napropamide and diflufenican at a wide range of doses i.e. 0, 125, 250, 500 and 1000 g/ha of napropamide plus diflufenican at 0, 31, 62, 125, 250 and 500 g/ha. Napropamide was also sprayed alone at 2000 g/ha and diflufenican alone at 1000 g/ha.

All treatments were made in an appropriate volume of water by using appropriate quantities of a 45% w/v emulsifiable concentrate of napropamide (commercial product) and diflufenican formulated as an experimental aqueous suspension concentrate containing 50% w/v active ingredient (described in Example 1 hereinafter), to give the above dose rates in a spray volume of 290 l/ha. All treatments were applied using a laboratory sprayer fitted with a spraying systems Teejet SS 8003E operating at 2.94 kgf/cm$^2$. The treatments were applied to Galium aparine, Stellaria media and Tripleurospermum maritimum weed species. The species were sown, in loam soil, in separate 7.5 cm square pots. Approximately 65 seeds were measured out for each pot of Stellaria media and Tripleurospermum maritimum and given a light covering of loam soil. Galium aparine seeds were pregerminated and planted 5 per pot 1 cm deep in loam soil. There were 4 replicated pots per treatment which were arranged in a randomised block design in a glasshouse after treatment. The pots were watered by a combination of overhead irrigation and sub-irrigation. A visual assessment of weed control was made 19 days after treatment as a percentage compared to the untreated pots. The mean percentage weed control was calculated and from these results the 90% herbicidally effective dose ($ED_{90}$) in grams of diflufenican per hectare was calculated for diflufenican alone and in mixtures with napropamide. The following values were obtained:-

For Galium aparine:

| | $ED_{90}$ |
|---|---|
| diflufenican alone | 511 |
| diflufenican with 125 g napropamide/ha | 299 |
| diflufenican with 250 g napropamide/ha | 263 |
| diflufenican with 500 g napropamide/ha | 191 |
| diflufenican with 1000 g napropamide/ha | 88 |
| The $ED_{90}$ of napropamide alone was found to be 2030 g/ha. | |

For Stellaria media:

| | $ED_{90}$ |
|---|---|
| diflufenican alone | 78 |
| diflufenican with 125 g napropamide/ha | 38 |
| diflufenican with 250 g napropamide/ha | 20 |
| diflufenican with 500 g napropamide/ha | less than 15.6 |
| diflufenican with 1000 g napropamide/ha | less than 15.6 |
| The $ED_{90}$ of napropamide alone was found to be 833 g/ha. | |

For Tripleurospermum maritimum:

| | $ED_{90}$ |
|---|---|
| diflufenican alone | 238 |
| diflufenican with 125 g napropamide/ha | 141 |
| diflufenican with 250 g napropamide/ha | 94 |
| diflufenican with 500 g napropamide/ha | 89 |
| diflufenican with 1000 g napropamide/ha | 51 |
| The $ED_{90}$ of napropamide alone was found to be 1488 g/ha. | |

The values above were then used to plot $ED_{90}$ isoboles for a two-sided effect (Tammes, op. cit. p. 75) where both compounds were active. The isoboles produced for each species, shown hereinafter in Figures I, II and III were clearly of a type III isobole (Tammes, op. cit. p. 75) which is characteristic of synergism.

According to a further feature of the present invention, there is provided a product comprising (a) napropamide and (b) diflufenican as a combined preparation for simultaneous, separate or sequential use in controlling the growth of weeds at a locus.

According to a feature of the present invention, there are provided compositions suitable for herbicidal use comprising (a) napropamide and (b) diflufenican, for example in proportions of 200:1 to 1:2, preferably 40:1 to 4:1, w/w in association with, and preferably homogeneously dispersed in, one or more compatible herbicidally-acceptable diluents or carriers and/or surface-active agents (i.e. diluents or carriers or surface-active agents of the type generally accepted in the art as being suitable for use in herbicidal compositions and which are compatible with napropamide and diflufenican). The term "homogeneously dispersed" is used to include compositions in which napropamide and diflufenican are dissolved in the other components. The term "herbicidal compositions" is used in a broad sense to include not only compositions which are ready for use as herbicides but also concentrates which must be diluted before use. Preferably, the compositions contain from 0.05 to 90% by weight of napropamide and diflufenican.

The herbicidal compositions may contain both a diluent or carrier and a surface-active (e.g. wetting, dispersing, or emulsifying) agent. Surface-active agents which may be present in herbicidal compositions of the present invention may be of the ionic or non-ionic types, for example sulphoricinoleates, quaternary ammonium derivatives, products based on condensates of ethylene oxide with nonyl- or octyl-phenols, or carboxylic acid esters of anhydrosorbitols which have been rendered soluble by etherification of the free hydroxy groups by condensation with ethylene oxide, alkali and alkaline earth metal salts of sulphuric acid esters and sulphonic acids such as dinoyl- and dioctyl-sodium sulphono-succinates and alkali and alkaline earth metal salts of high molecular weight sulphonic acid derivatives such as sodium and calcium lignosulphonates. Examples of suitable solid diluents or carriers are aluminium silicate, talc, calcined magnesia, kieselguhr, tricalcium phosphate, powdered cork, adsorbent carbon black and clays such as kaolin and bentonite. The solid compositions (which may take the form of dusts, granules or wettable powders) are preferably prepared by grinding napropamide and diflufenican with solid diluents or by impregnating the solid diluents or carriers with solutions of napropamide and diflufenican in volatile solvents, evaporating the solvents and, if necessary, grinding the products so as to obtain powders. Granular formulations may be prepared by absorbing napropamide and diflufenican (dissolved in volatile solvents) onto the solid diluents or carriers in granular form and evaporating the solvents, or by granulating compositions in powder form obtained as described above. Solid herbicidal compositions, particularly wettable powders, may contain wetting or dispersing agents (for example of the types described above), which may also, when solid, serve as diluents or carriers.

Liquid compositions according to the invention may take the form of aqueous, organic or aqueous-organic solutions, suspensions and emulsions which may incorporate a surface-active agent. Suitable liquid diluents for incorporation in the liquid compositions include water, acetophenone, cyclohexanone, isophorone, toluene, xylene and mineral, animal and vegetable oils (and mixtures of these diluents). Surface-active agents, which may be present in the liquid compositions, may be ionic or non-ionic (for example of the types described above) and may, when liquid, also serve as diluents or carriers.

Wettable powders and liquid compositions in the form of concentrates may be diluted with water or other suitable diluents, for example mineral or vegetable oils, particularly in the case of liquid concentrates in which the diluent or carrier is an oil, to give compositions ready for use. When desired, liquid compositions of napropamide and diflufenican may be used in the form of self-emulsifying concentrates containing the active substances dissolved in the emulsifying agents or in solvents containing emulsifying agents compatible with the active substances, the simple addition of water to such concentrates producing compositions ready for use.

Liquid concentrates in which the diluent or carrier is an oil may be used without further dilution using the electrostatic spray technique.

Herbicidal compositions according to the present invention may also contain, if desired, conventional adjuvants such as adhesives, protective colloids, thickeners, penetrating agents, stabilisers, sequestering agents, anti-caking agents, colouring agents and corrosion inhibitors. These adjuvants may also serve as carriers or diluents.

Preferred herbicidal compositions according to the present invention are aqueous suspension concentrates which comprise from 10 to 70% w/v of napropamide and diflufenican, from 2 to 10% w/v of surface-active agent, from 0.1 to 5% w/v of thickener and from 15 to 87.9% by volume of water; wettable powders which comprise from 10 to 90% w/w of napropamide and diflufenican, from 2 to 10% w/w of surface-active agent and from 8 to 88% w/w solid diluent or carrier; liquid water soluble concentrates which comprise from 10 to 30% w/v of napropamide and diflufenican, from 5 to 25% w/v of surface-active agent and from 45 to 85% by volume of water-miscible solvent, e.g. dimethylformamide; liquid emulsifiable suspension concentrates which comprise 10 to 70% w/v of napropamide and diflufenican, from 5 to 15% w/v of surface-active agent, from 0.1 to 5% w/v of thickener and from 10 to 84.9% by volume of organic solvent; granules which comprise from 2 to 10% w/w of napropamide and diflufenican, from 0.5 to 2% w/w of surface-active agent and from 88 to 97.5% w/w of granular carrier and emulsifiable concentrates which comprise from 0.05 to 90% w/v, and preferably from 1 to 60% w/v, of napropamide and diflufenican, 0.01 to 10% w/v, and preferably from 1 to 10% w/v, of surface-active agent and from 9.99 to 99.94%, and preferably from 39 to 98.99%, by volume of organic solvent.

Herbicidal compositions according to the present invention may also comprise napropamide and diflufenican in association with, and preferably homogeneously dispersed in, one or more other pesticidally active compounds and, if desired, one or more compatible pesticidally acceptable diluents or carriers, surface-active agents and conventional adjuvants as hereinbefore described. Examples of other pesticidally active compounds which may be included in, or used in conjunction with, the herbicidal compositions of the present invention include herbicides, for example to increase the range of weed species controlled, for example simazine [2-chloro-4,6-bis(ethylamino)-1,3,5-triazine], oxyfluorfen [2-chloro-1-(3-ethoxy-4-nitrophenoxy)-4-trifluoromethylbenzene], pebulate [S-propyl butyl(ethyl)thiocarbamate], oxadiazon [5-t.butyl-3-(2,4-dichloro-5-isopropoxyphenyl)-1,3,4-oxadiazol-2(3H)-one] and trifluralin [2,6-dinitro-N,N-dipropyl-4-trifluoromethylaniline] or to control emerged weeds e.g. glyphosate [N-(phosphonomethyl)glycine] and paraquat [1,1′-dimethyl-4,4′-bipyridyldiylium ion]; insecticides, e.g. carbaryl [naphth-1-yl N-methylcarbamate] and synthetic pyrethroids, e.g. permethrin and cypermethrin; and fungicides, e.g. 2,6-dimethyl-4-tridecyl-morpholine, methyl N-(1-butylcarbamoylbenzimidazol-2-yl)carbamate, 1,2-bis-(3-methoxycarbonyl-2-thioureido)benzene, isopropyl 1-carbamoyl-3-(3,5-dichlorophenyl)hydantoin and 1-(4-chlorophenoxy)-3,3-dimethyl-1-(1,2,4-triazol-1-yl)butan-2-one. Other biologically active materials which may be included in, or used in conjunction with, the herbicidal compositions of the present invention are plant growth regulators, e.g. succinamic acid, (2-chloroethyl)trimethylammonium chloride and 2-chloroethanephosphonic acid; and fertilizers containing, for example, nitrogen, potassium and phosphorus and trace elements known to be essential to successful plant life, e.g. iron, magnesium, zinc, manganese, cobalt and copper.

Pesticidally active compounds and other biologically active materials which may be included in, or used in conjunction with, the herbicidal compositions of the present invention, for example those hereinbefore mentioned, and which are acids, may, if desired, be utilized in the form of conventional derivatives, for example alkali metal and amine salts and esters.

The compositions of the invention may be made up as an article of manufacture comprising napropamide and diflufenican and optionally other biologically active compounds as hereinbefore described or, as is preferred, a herbicidal composition as hereinbefore described, and preferably a herbicidal concentrate which must be diluted before use, comprising napropamide and diflufenican within a container for the aforesaid napropamide and diflufenican or a said herbicidal composition, and instructions physically associated with the aforesaid container setting out the manner in which the aforesaid napropamide and diflufenican or herbicidal composition contained therein is to be used to control the growth of weeds. The containers will normally be of the types conventionally used for the storage of chemical substances which are solids at normal ambient temperatures and herbicidal compositions, particularly in the form of concentrates, for example cans and drums of metal, which may be internally-lacquered, and plastics materials, bottle of glass and plastics materials and, when the contents of the container is a solid, for example granular herbicidal compositions, boxes, for example of cardboard, plastics materials and metal, or sacks. The containers will normally be of sufficient capacity to contain amounts of the active ingredients or herbicidal compositions sufficient to treat at least 0.5 hectares of ground to control the growth of weeds

therein but will not exceed a size which is convenient for conventional methods of handling. The instructions will be physically associated with the container, for example by being printed directly thereon or on a label or tag affixed thereto. The directions will normally indicate that the contents of the container, after dilution if necessary, are to be applied to control the growth of weeds at rates of application from 250g to 10kg of napropamide and from 50g to 500g of diflufenican per hectare in the manner and for the purposes hereinbefore described.

The following Examples illustrate herbicidal compositions according to the present invention.

EXAMPLE 1

An aqueous suspension concentrate was made from:

| | |
|---|---|
| diflufenican | 50% w/v |
| propylene glycol | 5% w/v |
| Olin 10 G (para-nonylphenoxy polyglycidol) | 0.67% w/v |
| Soprophor FL (triethanolamine salt of oxyethylated polyarylphenolphosphate) | 1.33% w/v |
| Antifoam FD (silicone antifoam) | 0.01% w/v |
| Rhodigel 23 (xanthan gum) | 0.2% w/v |
| dichlorophen sodium solution, 40% w/w | 0.25% w/v |
| water | to 100% by volume |

by blending the diflufenican with an aqueous solution of the Soprophor FL, Antifoam FD and Olin 10 G and milling through a bead-mill. An aqueous solution of the Rhodigel 23, dichlorophen sodium-solution and propylene glycol is then blended with the milled slurry and made up to volume with water.

EXAMPLE 2

A 1:4 mixture was formed by tank mixing 0.51 of the composition of Example 1 with 2.221 of a 45% w/v commercial suspension concentrate of napropamide in a volume of 2001 of water. The resulting spray fluid was applied as a directional spray at a rate of 200 1/ha to control weeds in a newly-planted conifer nursery.

EXAMPLE 3

Granules (40:1) were prepared from

| | w/w |
|---|---|
| napropamide | 4% |
| diflufenican | 0.1% |
| Ethylan BCP (nonylphenol ethylene oxide condensate containing 9 moles ethylene oxide) | 1% |
| Oleic acid | 1% |
| Aromasol H (an aromatic solvent consisting predominantly of isomeric trimethylbenzenes) | 12% |
| 30/60 Attapulgite granules (sorptive silica clay) | 81.9% |

by mixing napropamide, diflufenican, Ethylan BCP, oleic acid and Aromasol H and spraying the mixture onto the Attapulgite granules. 100 kg of the resulting granules were then applied in a non-directional manner using a granule applicator at a rate of 100kg/ha to dormant woody ornamentals to control emergence of Stellaria media, Poa annua and Sinapis arvensis.

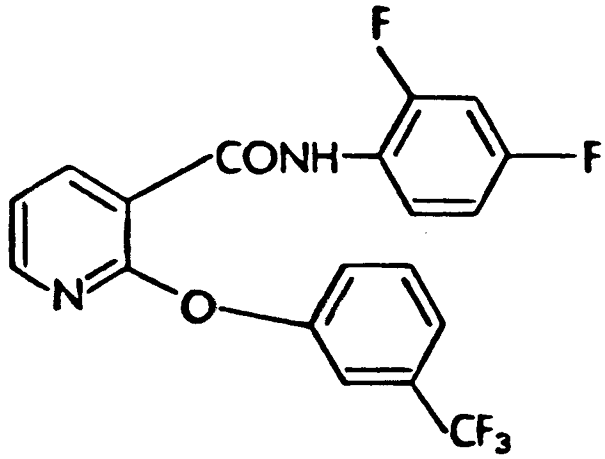

I

## Claims

1. A herbicidal composition which comprises (a) napropamide which is (R,S) -N,N-diethyl-2-(1-naphthyloxy)propionamide, and (b) diflufenican which is N-(2,4-difluorophenyl)-2-(3-trifluoromethylphenoxy)nicotinamide in association with a herbicidally acceptable diluent or carrier and/or surface active agent.

2. A herbicidal composition according to claim 1 in which the ratio of (a) and (b) is 200 : 1 to 1 : 2 w/w.

3. A herbicidal composition according to claim 1 in which the ratio of (a) to (b) is 40 : 1 to 4 : 1 w/w.

4. A herbicidal composition according to any one of the preceding claims which comprises from 0.05 to 90% by weight of napropamide and diflufenican.

5. A herbicidal composition according to any one of the preceding claims which comprises a surface active agent.

6. A method of controlling the growth of weeds at a locus used, or to be used, for growing trees, shrubs or soft fruit plants which comprises applying to the locus (a) napropamide which is (R,S)-N,N-diethyl-2-(1-naphthyloxy)propionamide and (b) diflufenican which is N-(2,4-difluorophenyl)-2-(3-trifluoromethylphenoxy)nicotinamide.

7. A method according to claim 6 in which the application rates of (a) and (b) are from 250g to 10kg/ha and from 50g to 500g/ha in proportions of 200 : 1 to 1 : 2 w/w.

8. A method according to claim 6 in which the application rates of (a) and (b) are from 1kg to 4kg/ha and from 100g to 250g/ha in proportions of 40 : 1 to 4 : 1 w/w.

9. A method according to claim 6, 7 or 8 in which the napropamide and diflufenican are applied by pre-emergence application.

10. A product comprising (a) napropamide which is (R,S)-N,N-diethyl-2-(1-naphthyloxy)propionamide and (b) diflufenican which is N-(2,4-difluorophenyl)-2-(3-trifluoromethylphenoxy)nicotinamide as a combined preparation for simultaneous, separate or sequential use in controlling the growth of weeds at a locus used, or to be used, for growing trees, shrubs or soft fruit plants.

## Revendications

1. Composition herbicide qui comprend (a) du napropamide qui est le (R,S)-N,N-diéthyl-2-(1-naphtyloxy)-propionamide, et (b) du diflufénican qui est le N-(2,4-difluorophényl)-2-(3-trifluorométhylphénoxy)-

nicotinamide en association avec un diluant ou support et/ou un tensioactif acceptables avec les herbicides.

2. Une composition herbicide selon la revendication 1, caractérisée en ce que le rapport de (a) à (b) est de 100:1 à 1:2 en poids.

3. Une composition herbicide selon la revendication 1, caractérisée en ce que le rapport de (a) à (b) est de 40:1 à 4:1 en poids.

4. Une composition herbicide selon l'une quelconque des revendications précédentes, caractérisée en ce qu'elle comprend de 0,05 à 90 % en poids de napropamide et de diflufénican.

5. Une composition herbicide selon l'une quelconque des revendications précédentes, caractérisée en ce qu'elle comprend un agent tensioactif.

6. Un procédé de régulation de la croissance des mauvaises herbes dans un endroit utilisé ou à utiliser pour faire pousser des arbres, des arbustes ou des plantes à fruits sucrés, caractérisé en ce qu'il consiste à appliquer sur l'endroit (a) du napropamide qui est le (R,S)-N,N-diéthyl-2-(1-naphtyloxy)-propionamide et (b) du diflufénican qui est le N-(2,4-difluorophényl)-2-(3-trifluorométhylphénoxy)-nicotinamide.

7. Un procédé selon la revendication 6, caractérisé en ce que les taux d'application de (a) et (b) sont de 250 g à 10 kg/ha et de 50 g à 500 g/ha dans des proportions de 200:1 à 1:2 en poids.

8. Un procédé selon la revendication 6, caractérisé en ce que les taux d'application de (a) et (b) sont de 1 kg à 4 kg/ha et de 100 g à 250 g/ha dans des proportions de 40:1 à 4:1 en poids.

9. Un procédé selon la revendication 6, 7 ou 8, caractérisé en ce que le napropamide et le diflufénican sont appliqués par application en pré-levée.

10. Un produit comprenant (a) du napropamide qui est le (R,S)-N,N-diéthyl-2-(1-naphtyloxy)propionamide et (b) du diflufénican qui est le N-(2,4-difluorophényl)-2-(3-trifluorométhylphénoxy)nicotinamide sous forme d'une préparation combinée pour l'utilisation simultanée, séparée ou séquentielle dans la maîtrise de la croissance des mauvaises herbes dans un endroit utilisé ou à utiliser pour faire pousser des arbres, des arbustes ou des plantes à fruits sucrés.

## Patentansprüche

1. Herbizides Mittel, enthaltend
   (a) Napropamide [(R,S)-N,N-Diethyl-2-(1-naphthyloxy)-propionamid] und
   (b) Diflufenican [N-(2,4-Difluorphenyl)-2-(3-trifluormethylphenoxy)-nicotinamid]
   in Verbindung mit einem herbizidakzeptablen Verdünnungsmittel oder Träger und/oder oberflächenaktiven Mittel.

2. Herbizides Mittel nach Anspruch 1, dadurch gekennzeichnet, daß das Gewichtsverhältnis (a)/(b) 200/1 bis 1/2 (g/g) beträgt.

3. Herbizides Mittel nach Anspruch 1, dadurch gekennzeichnet, daß das Gewichtsverhältnis (a)/(b) 40/1 bis 4/1 (g/g) beträgt.

4. Herbizides Mittel nach einem der vorhergehenden Ansprüche, enthaltend 0,05 - 90 Gew.-% Napropamide und Diflufenican.

5. Herbizides Mittel nach einem der vorhergehenden Ansprüche, enthaltend ein oberflächenaktives Mittel.

6. Verfahren zur Bekämpfung des Unkrautwachstums an zum Wachsen von Bäumen, Stauden oder Weichfruchtpflanzen benutzten oder vorgesehenen Orten oder Stellen durch Applikation (an dem betreffenden Ort bzw. an der betreffenden Stelle)

(a) Napropamide [(R,S)-N,N-Diethyl-2-(1-naphthyloxy)-propionamid] und
(b) Diflufenican [N-(2,4-Difluorphenyl)-2-(3-trifluormethylphenoxy)-nicotinamid].

**7.** Verfahren nach Anspruch 6, bei welchem die Applikationsmengen (a) bzw. (b) 250 g bis 10 kg/ha bzw. 50 g bis 500 g/ha im Verhältnis 200/1 bis 1/2 (g/g) betragen.

**8.** Verfahren nach Anspruch 6, dadurch gekennzeichnet, daß die Applikationsmengen (a) bzw. (b) 1 - 4 kg/ha bzw. 100 - 250 g/ha im Verhältnis 40/1 bis 4/1 (g/g) betragen.

**9.** Verfahren nach Anspruch 6, 7 oder 8, bei welchem das Napropamide und das Diflufenican vor dem Austrieb bzw. Sprießen appliziert werden.

**10.** Produkt, umfassend
(a) Napropamide [(R,S)-N,N-Diethyl-2-(1-naphthyloxy)-propionamid und
(b) Diflufenican [N-(2,4-Difluorphenyl)-2-(3-trifluormethylphenoxy)-nicotinamid]
als Kombinationspräparat zum gleichzeitigen, getrennten und aufeinanderfolgenden Gebrauch bei der Bekämpfung des Wachstums von Unkräutern an zum Wachsen von Bäumen, Stauden oder Weichfruchtpflanzen benutzten oder vorgesehenen Orten bzw. Stellen.

Figure I

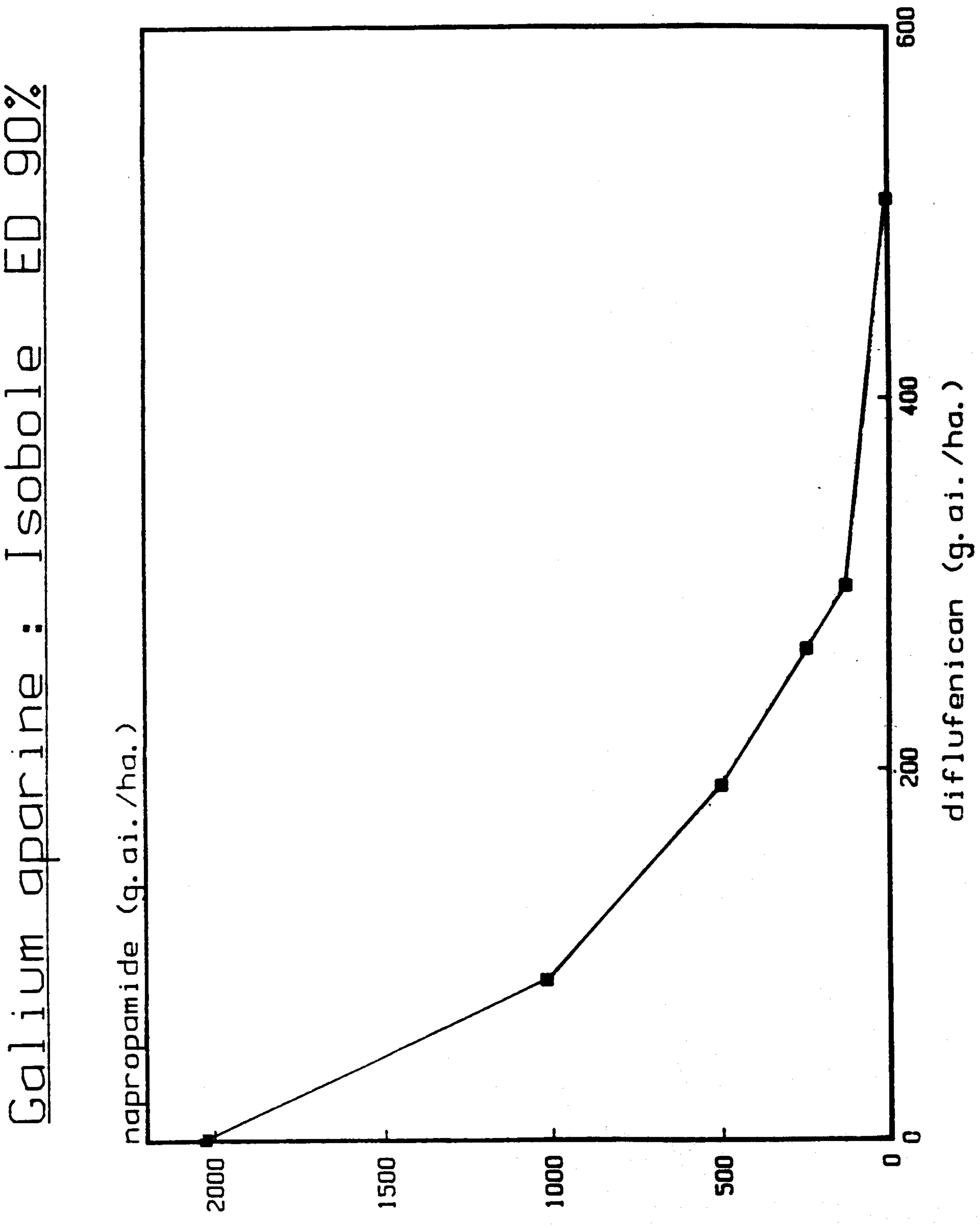
Galium aparine : Isobole ED 90%
napropamide (g.ai./ha.)
diflufenican (g.ai./ha.)
2000
1500
1000
500
0
0
200
400
600

Figure II

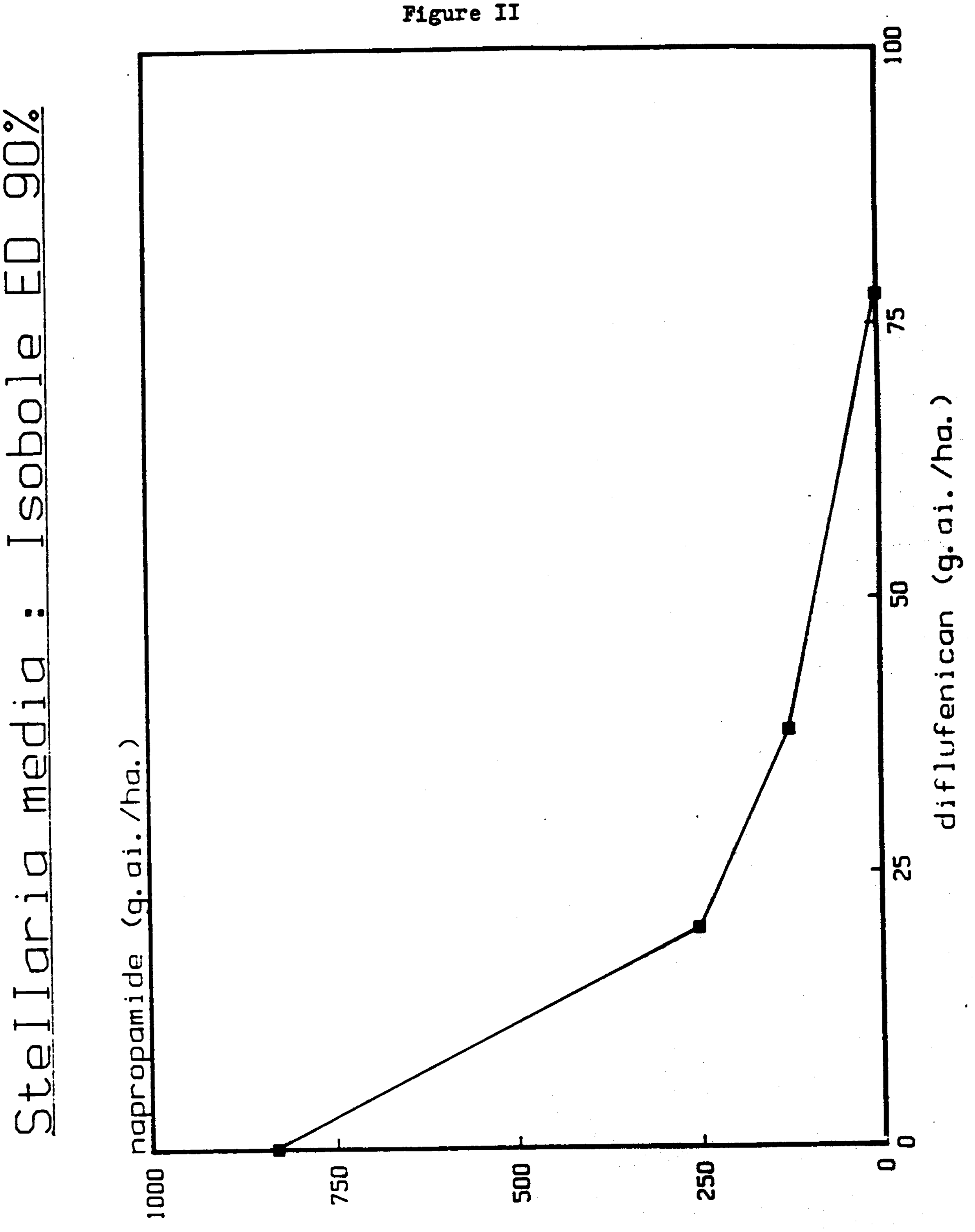
Stellaria media : Isobole ED 90%
napropamide (g.ai./ha.)
diflufenican (g.ai./ha.)
1000
750
500
250
0
0
25
50
75
100

**Figure III**

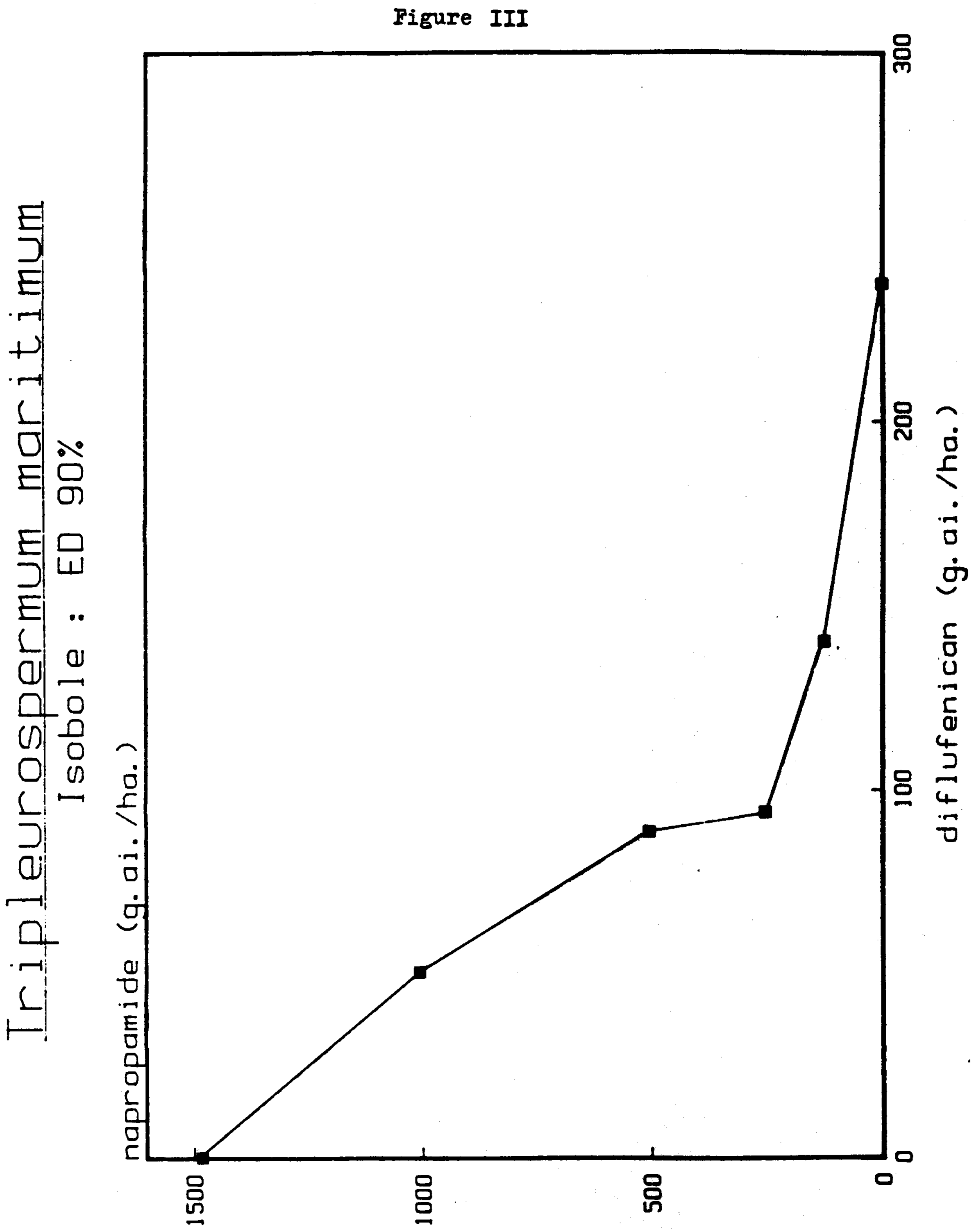
Tripleurospermum maritimum
Isobole : ED 90%
napropamide (g. ai./ha.)
diflufenican (g. ai./ha.)
1500
1000
500
0
0
100
200
300